# EUROPÄISCHE PATENTSCHRIFT

(11) **EP 4 624 307 B1**
(45) Veröffentlichungstag und Bekanntmachung des Hinweises auf die Patenterteilung: **17.06.2026**
(21) Anmeldenummer: 24166537.1
(22) Anmeldetag: 26.03.2024
(51) Int. Cl.: B62B 3/18

(54) **ROLLBEHÄLTER**
ROLL CONTAINER
CONTENEUR ROULANT

(43) Veröffentlichungstag der Anmeldung: 01.10.2025
(73) Patentinhaber: FEIL rolltainer GmbH, 59602 Rüthen (DE)
(72) Erfinder: Oel, Christian, 59602 Rüthen (DE)
(74) Vertreter: Andrejewski - Honke Patent- und Rechtsanwälte Partnerschaft mbB

(56) Entgegenhaltungen:
- EP-A1- 3 738 859
- EP-A2- 0 106 703
- EP-B1- 3 599 142
- DE-U1- 202007 011 085

## Beschreibung

Die Erfindung betrifft einen Rollbehälter, insbesondere Rollcontainer, mit einer auf drehbaren Rollen gelagerten U-förmigen Basis mit U-Schenkeln, ferner mit einem auf der Basis angeordneten Gitterwandgestell aus zumindest zwei sich gegenüberliegenden sowie um jeweils eine im wesentlichen vertikale Achse schwenkbaren Seitenwänden, und mit einer um eine größtenteils horizontale Schwenkachse klappbaren Bodenplatte, wobei die Bodenplatte gegen Federkraft in eine größtenteils horizontale Gebrauchslage oberhalb der Basis sowie durch Federkraft in eine größtenteils aufrechte Nestlage schwenkbar ausgebildet ist, und wobei eine die U-förmige Basis wahlweise schließende und öffnende Verbindungsstange zwischen den U-Schenkeln vorgesehen ist, welche als an einen U-Schenkel drehbar angeschlossene Pendelstange ausgebildet ist.

Die U-förmige Basis ist dabei überwiegend horizontal orientiert. Auf der Basis steht das Gitterwandgestell größtenteils vertikal auf. Die Nestlage der Bodenplatte korrespondiert zu ihrer überwiegend senkrechten Ausrichtung. Auf diese Weise können bei in Nestlage der Bodenplatte befindlichen Rollbehälter mehrere Rollbehälter zu Transportzwecken in der fraglichen Nestlage ineinandergeschoben werden.

Rollbehälter und insbesondere zusammenfahrbare Rollbehälter sind seit langem bekannt, wie beispielhaft die DE 1 994 644 U der Anmelderin belegt. Hier geht es um einen zusammenfahrbaren Rollbehälter mit einer hochklappbaren Ladeplatte. Die Ladeplatte ist an einem Seitenteil angelegt und über einen oder mehrere Gelenkhebel mit dem gegenüberliegenden Seitenteil verbunden. Beim Hochschwenken der Ladeplatte werden die Seitenteile parallel zueinander zusammengefahren.

Rollbehälter und insbesondere Rollcontainer bezeichnen rollbare Transportgestelle, die zur Aufnahme, Lagerung und Transport von Gegenständen eingesetzt werden, beispielsweise in der Lebensmittelindustrie. In der Regel verfügen die Rollbehälter bzw. Rollcontainer typischerweise über einen Boden und wenigstens zwei Seitenwände. Zur Reduzierung des Gewichtes handelt es sich bei den Seitenwänden meistens um Gitterwände und diese definieren insgesamt das zuvor bereits beschriebene Gitterwandgestell.

Mithilfe der an der Basis vorgesehenen drehbaren Rollen kann der Rollbehälter leicht verfahren werden. Dazu mögen insgesamt vier Rollen vorgesehen werden. Beispielsweise können zwei Rollen als feststehende Bockrollen und zwei weitere Rollen als Lenkrollen ausgebildet sein. Es ist aber auch möglich, auf insgesamt vier Lenkrollen zurückzugreifen.

Der Boden und die Seitenwände sind im Allgemeinen aus Metall bzw. einem Metallgeflecht hergestellt, um eine einfache Reinigung zu ermöglichen und zugleich das Gewicht niedrig zu halten. Außerdem verfügen solche Metallgeflechte bzw. Gitterwandgestelle über eine hohe Stabilität, sodass die beschriebenen Rollcontainer insbesondere im Lager- bzw. Logistikbereich eingesetzt werden können.

Da leere Rollcontainer einen hohen Platzbedarf aufweisen, werden heutzutage oftmals Lösungen verfolgt, bei denen die Rollbehälter insgesamt in eine sogenannte Nestlage überführt werden können. In dieser Nestlage ist der Boden bzw. die Bodenplatte größtenteils aufrecht hochgeschwenkt. Hierfür sorgt eine Feder. Die Nestlage wird ohne zusätzliche Beaufschlagung des Bodens regelmäßig eingenommen, eben durch die Kraft der Feder.

In dieser Nestlage können mehrere Rollbehälter ineinandergeschoben werden. Zu diesem Zweck ist die U-förmige Basis mit ihren beiden U-Schenkeln als sogenannter A-Frame ausgebildet. Das heißt, die beiden U-Schenkel verlaufen schräg zur Basis. Auf diese Weise können die um jeweils ihre vertikale Achse schwenkbaren Seitenwände bei hochgeschwenkter Bodenplatte an die schrägen U-Schenkel angelegt werden und lassen sich die einzelnen leeren Rollbehälter ineinanderschieben bzw. "nesten". Das ist im Detail beispielhaft in der EP 2 597 011 A1 beschrieben.

Sobald die Bodenplatte in ihre größtenteils horizontale Gebrauchslage oberhalb der Basis gegen die Federkraft geschwenkt wird, werden die beiden an den schrägen U-Schenkeln anliegenden Seitenwände auseinandergefahren und in der Gebrauchslage mit Hilfe der horizontal angeordneten Bodenplatte gehalten. Zusätzliche Ausleger können dafür sorgen, dass die betreffenden Seitenwände in der Gebrauchslage lösbar an der Basis fixiert werden. Sobald in der Gebrauchslage Waren oder Gegenstände auf der Bodenplatte abgestellt werden, kann diese nicht mehr selbsttätig durch die Federkraft in ihre aufrechte Nestlage verschwenken.

Beim weiteren Stand der Technik nach der DE 20 2014 105 450 U1 sorgt eine spezielle Torsionsfeder dafür, dass die Bodenplatte mit der bereits angesprochenen Federkraft beaufschlagt wird. Dazu ist die Torsionsfeder spiralförmig um eine Schwenkstange herumgewunden. Das hat sich grundsätzlich bewährt.

Im Rahmen der WO 98/24699 A1 wird ein Rollbehälter beschrieben, welcher mit 2 Paaren an schwenkbaren Verbindungsstangen zwischen den U-Schenkeln seiner Seitenwände ausgerüstet ist. Dadurch wird insgesamt in eingeschwenktem Zustand eine käfigartige Anordnung zur Verfügung gestellt.

Durch den weiteren Stand der Technik nach der DE 10 2004 059 245 B3 ist ein Transportgerät für hochbauendes Transportgut bekannt geworden. Dabei ist auf jeder Seite eines Fahrgestells ein Querriegel vorgesehen, mit dessen Hilfe Fußstücke miteinander verbunden sind. Der Querriegel lässt sich mindestens an einer Seite des Fahrgestells lösen.

Die fraglichen Rollbehälter werden typischerweise entweder von Bedienpersonal manuell hin- und hergeschoben oder beispielsweise mit Förderelementen transportiert. Bei diesen Förderelementen kann es sich um Flurförderfahrzeuge, wie beispielsweise Gabelstapler, handeln. Der Transport mit Hilfe der Flurförderfahrzeuge erfolgt dabei derart, dass das betreffende Flurförderfahrzeug mit seinen Gabelzinken unter die beiden U-Schenkel der U-förmigen Basis fährt, also quer zur Längserstreckung der sich gegenüberliegenden beiden Seitenwände.

Neben dieser Möglichkeit des Transportes des bekannten Rollbehälters in seiner Gebrauchslage durch quer zur Längserstreckung der Seitenwände die Basis untergreifenden Gabelzinken werden heutzutage zunehmend automatisierte Förderelemente in der Praxis eingesetzt. Außerdem ergibt sich oftmals die zusätzliche Anforderung, den betreffenden Rollbehälter nicht quer zur Längserstreckung der Seitenwände zu unterfahren, sondern den Rollbehälter in Längsrichtung mit einem entsprechenden Förderelement aufnehmen zu können.

Der gattungsbildende Stand der Technik nach der EP 3 599 142 B1 schlägt zu diesem Zweck eine Pendelstange als die U-förmige Basis wahlweise schließende und öffnende Verbindungsstange vor. Die Verbindungsstange ist dabei an einen U-Schenkel der U-förmigen Basis drehbar angeschlossen. Auf diese Weise wird im Allgemeinen verhindert, dass der Boden bzw. die Bodenplatte bei der Förderung hochklappen kann oder der Rollbehälter insgesamt kippt. Allerdings gibt es in diesem Zusammenhang noch Verbesserungsbedarf, und zwar dahingehend, dass eine weitere und zusätzliche Stabilisierung des Rollbehälters in der Praxis gewünscht wird, und zwar insbesondere dann, wenn die Bodenplatte gegen Federkraft ihre größtenteils horizontale Gebrauchslage oberhalb der Basis einnimmt. Hier setzt die Erfindung ein.

Der Erfindung liegt das technische Problem zugrunde, einen derartigen Rollbehälter so weiterzuentwickeln, dass insbesondere eine stabile Gebrauchslage der Bodenplatte und damit des gesamten Rollbehälters beobachtet wird.

Zur Lösung dieser technischen Problemstellung schlägt die Erfindung ausgehend von einem gattungsgemäßen Rollbehälter vor, dass die Pendelstange und die Bodenplatte jeweils Arretiermittel aufweisen, die in der Gebrauchslage der Bodenplatte ineinandergreifen.

Die Erfindung geht zunächst einmal von der Erkenntnis aus, dass die neuentwickelten Rollbehälter in der Nestlage nach wie vor und unverändert bevorratet und transportiert werden können. In der Gebrauchslage sorgen nun die Arretiermittel an der Pendelstange und der Bodenplatte insgesamt dafür, dass der Rollbehälter in diesem Funktionszustand zusätzlich stabilisiert wird. Dabei sorgt die Verbindungsstange bzw. Pendelstange nach wie vor und unverändert dafür, dass die U-förmige Basis wahlweise geschlossen und geöffnet werden kann.

In geöffnetem Zustand und folglich der Nestlage des Rollbehälters sowie der Bodenplatte lassen sich die jeweiligen Rollbehälter nach wie vor und problemlos ineinander schieben, nämlich nesten, wie dies in dem den Ausgangspunkt darstellenden Stand der Technik nach der EP 3 599 142 B1 und in den dort referenzierten weiteren Schriften DE 20 2014 105 450 U1 oder auch in der EP 2 597 011 A1 im Detail beschrieben wird. Dagegen korrespondiert die Gebrauchslage dazu, dass die Verbindungsstange bzw. Pendelstange die U-förmige Basis schließt. Zu diesem Zweck erstreckt sich die Pendelstange im Allgemeinen zwischen den jeweiligen Enden der U-Schenkel. Außerdem bewegt sich die Pendelstange hierbei in der von der U-förmigen Basis aufgespannten (meistens horizontalen) Ebene.

Auf diese Weise definieren die U-förmige Basis und die Pendelstange insgesamt ein geschlossenes und meistens trapezförmiges Viereck. Das Viereck aus der U-förmigen Basis und der Pendelstange spannt seinerseits eine Ebene auf, die als regelmäßig horizontalorientierte Aufnahmefläche für ein Förderelement fungieren kann. D. h., aufgrund der ausgebildeten Aufnahmefläche kann der Rollbehälter zumindest in der Gebrauchslage von beispielsweise einem Greifer, von Gabelzinken oder vergleichbaren Förderelementen untergriffen werden, und zwar sowohl in Längs- als auch in Querrichtung. Das begünstigt einen automatisierten Transport des erfindungsgemäßen Rollbehälters, weil eine bestimmte Ausrichtung nicht mehr erforderlich ist. Vielmehr stellte die mithilfe der U-förmigen Basis und der Pendelstange realisierte Aufnahmefläche für das Förderelement sicher, dass der Rollbehälter gleichsam richtungsunabhängig sowohl in Quer- als auch in Längsrichtung mithilfe des Förderelementes ergriffen und transportiert werden kann. Da in der Gebrauchslage zusätzlich die Arretiermittel an der Pendelstange und der Bodenplatte ineinandergreifen, wird der Rollbehälter insgesamt zusätzlich stabilisiert, weil die Bodenplatte ergänzend mit der Pendelstange eine lösbare Verbindung eingeht. Hierin sind die wesentlichen Vorteile zu sehen.

Nach weiterer vorteilhafter Ausgestaltung ist die Auslegung so getroffen, dass die Arretiermittel als einerseits Arretierbolzen und andererseits Arretierausnehmung ausgebildet sind. Meistens kommen zwei Arretierbolzen und zwei zugehörige Arretierausnehmungen zum Einsatz. Grundsätzlich können auch mehr als zwei Arretierbolzen und mehr als zwei Arretierausnehmungen realisiert sein.

In diesem Zusammenhang hat es sich bewährt, wenn der betreffende Arretierbolzen an der Pendelstange und die Arretierausnehmung an der Bodenplatte vorgesehen werden. Grundsätzlich kann natürlich auch umgekehrt verfahren werden. In diesem Fall findet sich die Arretierausnehmung an der Pendelstange, wohingegen die Bodenplatte mit dem zugehörigen Arretiernolzen ausgerüstet ist.

Im Regelfall ist der Arretierbolzen allerdings an die Pendelstange angeschlossen. Der Anschluss kann dabei durch übliche Montiertechniken vorgenommen werden. Beispielsweise kann der Arretierbolzen an die Pendelstange angeschweißt werden. Es ist auch möglich, den Arretierbolzen mit der Pendelstange schraubend zu verbinden.

Um etwaige Fertigungsungenauigkeiten, Schrägstellungen der Seitenwände und damit der Bodenplatte etc. auszugleichen, greift der Arretierbolzen im Allgemeinen mit vorgegebenen Spiel in die Arretierausnehmung ein. Meistens wird hier mit einem Spiel von wenigstens 1 mm gearbeitet. Ein solcher Spielausgleich lässt sich unter Beibehaltung der Arretierwirkung am besten dann realisieren und umsetzen, wenn die Arretierausnehmung als Langloch mit einer an den Durchmesser das Arretierbolzens angepassten Breite ausgebildet ist. Dadurch kann der Arretierbolzen innerhalb des Langlochs verschoben werden. Dadurch, dass die Breite des Langlochs an den Durchmesser des Arretierbolzens unter Berücksichtigung eines Spiels von beispielsweise +/- 1 mm angepasst ist, wird gleichwohl sichergestellt, dass durch die gegenseitige Wechselwirkung von Arretierbolzen und Arretierausnehmung der Rollbehälter insgesamt die gewünschte Stabilisierung erfährt. Der Arretierbolzen ist in diesem Zusammenhang größtenteils zylinderförmig ausgebildet.

Hierzu trägt ergänzend der Umstand bei, dass das Arretiermittel, eine untere Querstrebe an einer Seitenwand zur Lagerung der Bodenplatte und wenigstens ein Auflagerbügel an einer, einer horizontalen Schwenkachse der Bodenplatte gegenüberliegenden Seitenkante der Bodenplatte zusammengenommen eine U-förmige Fixierung der Bodenplatte gegenüber der Basis und den Seitenwänden definieren. Die U-förmige Fixierung ist dabei lösbar ausgebildet, um den Wechsel der Bodenplatte von ihrer Gebrauchslage zur Nestlage zu ermöglichen.

Die Pendelstange ist im Allgemeinen nicht nur drehbar an einen U-Schenkel der U-förmigen Basis angeschlossen. Sondern die Pendelstange ist darüber hinaus fußseitig drehbar an eine Längsstrebe der mit dem U-Schenkel der Basis gekoppelten einen Seitenwand angeschlossen. D. h., die fragliche Längsstrebe definiert die eine vertikale Achse, um welche die zugehörige Seitenwand schwenkbarer ausgebildet ist. Darüber hinaus ist die Pendelstange zusätzlich kopfseitig mit einem Haltebügel versehen. Dieser Haltebügel hintergreift dabei in die U-förmige Basis schließendem Zustand eine Längsstrebe der anderen gegenüberliegenden Seitenwand.

Auf diese Weise sorgt die Pendelstange in die U-förmige Basis schließendem Zustand dafür, dass insgesamt das zuvor bereits angesprochene trapezförmige Viereck aus der U-förmigen Basis und der Verbindungsstange bzw. Pendelstange gebildet wird und die horizontal orientierte Aufnahmefläche für ein Förderelement definiert.

Dadurch sorgt die Pendelstange nicht nur dafür, dass die U-förmige Basis geschlossen wird. Sondern zugleich stellt die Pendelstange sicher, dass die beiden Längsstreben der sich gegenüberliegenden Seitenwände lösbar miteinander gekoppelt werden. Wenn nun noch die Bodenplatte von ihrem nestenden Zustand in den Gebrauchszustand überführt wird, kommt es zu der insgesamt U-förmigen Fixierung. Denn diese wird von der unteren Querstrebe an der einen Seitenwand dem in die Arretierausnehmung eingreifenden Arretierbolzen an der Pendelstange und schließlich den Auflagerbügeln an der Bodenplatte zur Verfügung gestellt, welche in der Regel auf erneut einer unteren Querstrebe der gegenüberliegenden Seitenwand aufliegen. Das führt zu einer besonderen Stabilität des Rollbehälters mit der in der Gebrauchslage befindlichen Bodenplatte, die im bisherigen Stand der Technik so nicht beobachtet worden ist.

Nachfolgend wird die Erfindung anhand einer lediglich ein Ausführungsbeispiel darstellenden Zeichnung näher erläutert; es zeigen:
- Figur 1: den erfindungsgemäßen Rollbehälter in einer perspektivischen Übersicht mit der Bodenplatte in ihrer Gebrauchslage,
- Figur 2: den Gegenstand nach der Figur 1 mit der Bodenplatte in ihrer Nestlage,
- Figur 3: den Gegenstand nach der Figur 2 beim Übergang der Bodenplatte von ihrer Nestlage in die Gebrauchslage und
- Figur 4: mehrere der erfindungsgemäßen Rollbehälter bei einem Nestvorgang in Nestlage.

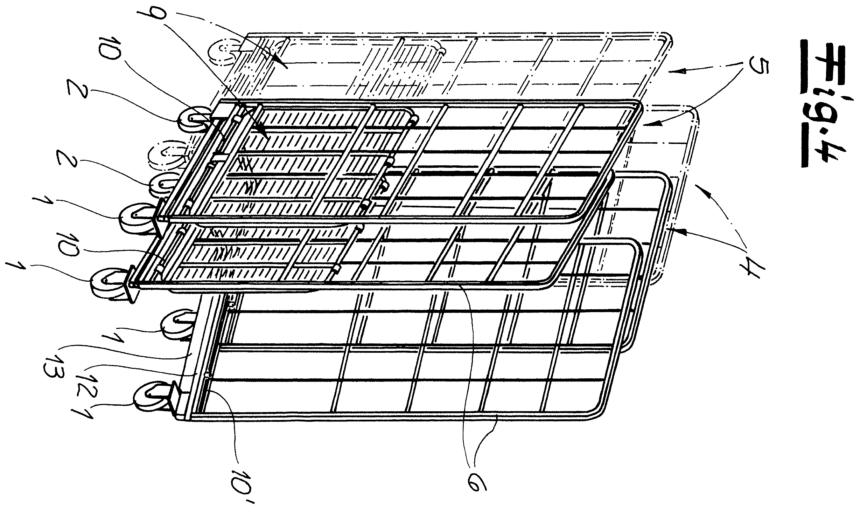

In den Figuren ist ein Rollbehälter bzw. Rollcontainer dargestellt. Dieser verfügt zunächst einmal über eine auf drehbaren Rollen 1, 2 gelagerte U-förmige Basis 3. Die U-förmige Basis 3 verfügt über U-Schenkel 3a sowie eine die beiden U-Schenkel 3a verbindende U-Basis 3b. Man erkennt, dass die U-Schenkel 3a schräg an die U-Basis 3b angeschlossen sind, und zwar in der Art eines sogenannten "A-Frame", um in Nestlage befindliche Rollcontainer entsprechend der Darstellung in der Fig. 4 ineinanderschieben zu können. Das ist im Detail in der gattungsbildenden DE 20 2014 105 450 U1 beschrieben. Ergänzend sei auf die ebenfalls in der Beschreibungseinleitung bereits gewürdigte EP 2 597 011 A1 hingewiesen. Die Basis 3 ist überwiegend horizontal orientiert.

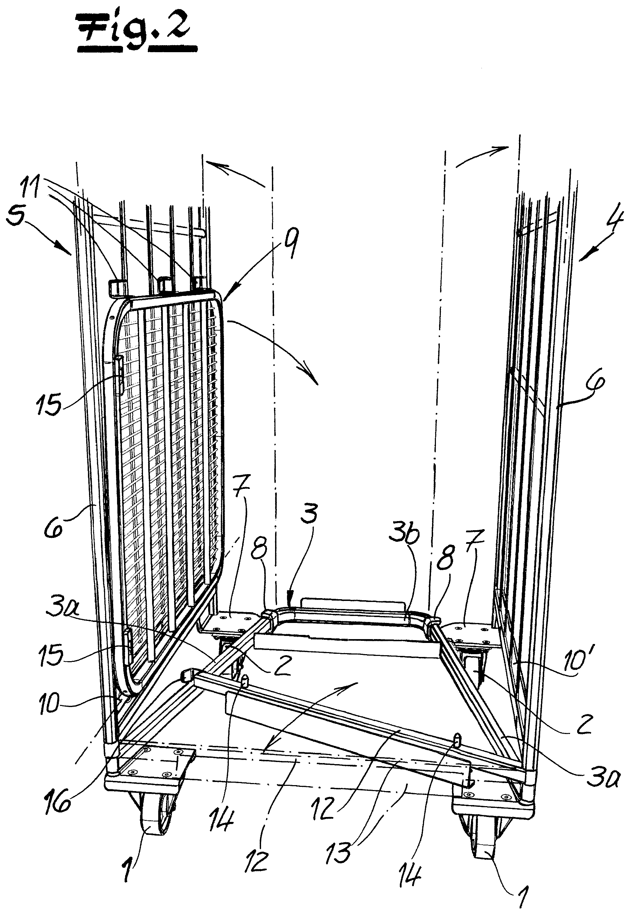

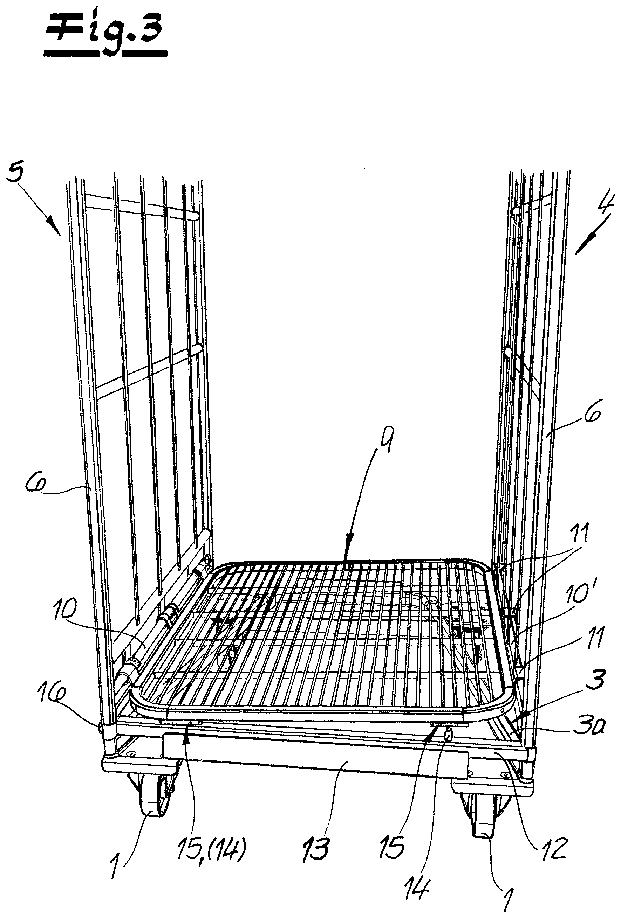

Zum grundsätzlichen Aufbau des Rollbehälters gehört ein auf der Basis 3 angeordnetes sowie größtenteils senkrecht verlaufendes Gitterwandgestell 4, 5, welches sich nach dem Ausführungsbeispiel aus zwei sich gegenüberliegenden Seitenwänden 4, 5 zusammensetzt, die jeweils als Metallgeflecht ausgebildet sind. Tatsächlich erkennt man eine rechte Seitenwand 4 und eine linke Seitenwand 5. Die beiden Seitenwände 4, 5 sind um jeweils eine im Wesentlichen vertikale Achse 6 schwenkbar ausgebildet. Die Schwenkbarkeit ist dabei insbesondere in der Fig. 2 durch Pfeile angedeutet. In der Fig. 2 befindet sich der erfindungsgemäße Rollbehälter in seiner Nestlage (strichpunktiert) bzw. seiner Gebrauchslage (durchgezogen), in welcher mehrere Rollbehälter entsprechend der Darstellung gemäß der Fig. 3 ineinandergeschoben werden können.

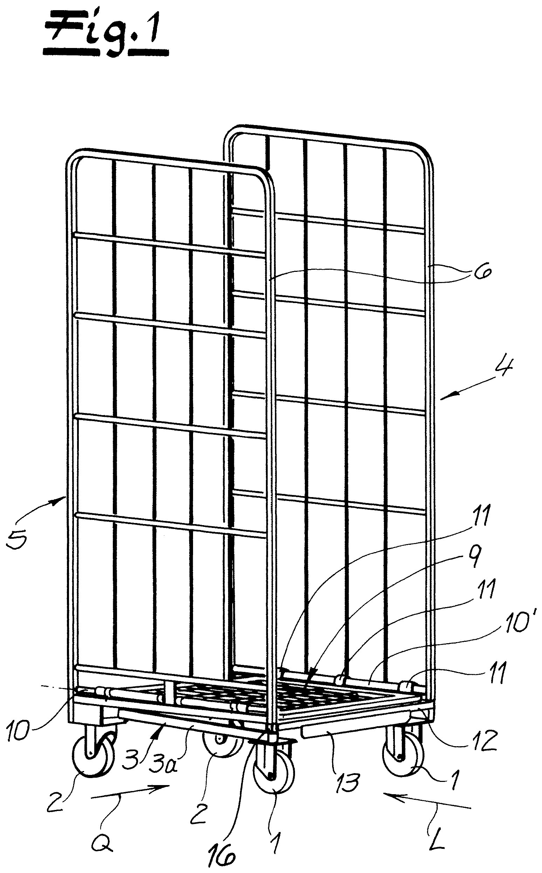

Die vertikale Achse 6 wird im Ausführungsbeispiel von einer in Blickrichtung auf den nach der Fig. 2 geöffneten Rollcontainer jeweils vorderen Längsstrebe 6 der zugehörigen Seitenwand 4, 5 definiert. Um den in der strichpunktierten Nestlage befindlichen Rollbehälter nach der Fig. 2 in die durchgezogene Gebrauchslage nach der Fig.2 bzw. entsprechend der Fig. 1 zu überführen, werden die beiden Seitenwände 4, 5 um ihre zugehörige vertikale Achse 6 mit ihren Enden nach außen geschwenkt, wie dies entsprechende Pfeile in der Fig. 2 andeuten. Jeweilige die Rollen 2 tragende Ausleger 7 mit in der Fig. 2 zu erkennenden hochstehenden Bügelanschlägen 8 sorgen für die Begrenzung der Schwenkbewegung der betreffenden Seitenwand 4, 5 und für ihre lösbare Festlegung an der U-förmigen Basis 3 in der Gebrauchslage nach der Fig. 1 . Jetzt kann eine Bodenplatte 9 heruntergeschwenkt und darauf abgelegte Gegenstände für den Transport aufnehmen.

Die Bodenplatte 9 ist ihrerseits um eine größtenteils horizontale Schwenkachse 10 klappbar ausgebildet. Nach dem Ausführungsbeispiel wird die horizontale Schwenkachse 10 für die Bodenplatte 9 durch eine untere Querstrebe 10 an der linken Seitenwand 5 definiert. Die Bodenplatte 9 wird durch Federkraft mit Hilfe einer nicht explizit dargestellten Feder beaufschlagt. Die Feder sorgt dafür, dass die Bodenplatte 9 ihre größtenteils aufrechte und in der Fig. 2 dargestellte Nestlage ohne Beaufschlagung einnimmt.

Um die Bodenplatte 9 in die in der Fig. 1 dargestellte Gebrauchslage gegen Federkraft zu überführen, muss die Bodenplatte 9 um ihre Schwenkachse 10 ausgehend von der Nestlage in der Fig. 2 im Uhrzeigersinn verschwenkt werden. Und zwar bis Auflagerbügel 11 an der Bodenplatte 9 an der der Schwenkachse 10 gegenüberliegenden Seite auf einer korrespondierenden Querstrebe 10' der rechten Seitenwand 4 zu liegen kommen. Damit diese Gebrauchslage des Rollbehälters und der Bodenplatte 9 beibehalten wird, ist es erforderlich, auf der Bodenplatte 9 Gegenstände abzulegen. Jetzt kann der Rollbehälter beispielsweise von einer Person hin- und hergeschoben werden. Dazu sind die beiden Rollen 1 nach dem Ausführungsbeispiel als feststehende Bockrollen 1 ausgebildet. Bei den weiteren Rollen 2 handelt es sich demgegenüber um Lenkrollen 2. Selbstverständlich können insgesamt auch vier Lenkrollen unterseitig an die Basis 3 angeschlossen sein. Das ist hier jedoch nicht dargestellt.

Von besonderer Bedeutung für die Erfindung ist nun eine insbesondere in der Fig. 2 zu erkennende Pendelstange 12. Die Pendelstange 12 kann in eine die U-förmige Basis 3 wahlweise schließende und öffnende Position zwischen die beiden U-Schenkel 3a verbracht werden. Nach dem Ausführungsbeispiel ist die Auslegung so getroffen, dass die fragliche Pendelstange 12 die beiden U-Schenkel 3a in ihrer schließenden Position endseitig mechanisch miteinander verbindet. Diese schließende Position der Pendelstange 12 korrespondiert zur Gebrauchslage des Rollbehälters nach der Fig. 1. Soll jedoch der Rollbehälter seine Nestlage entsprechend der Fig. 2 einnehmen, so muss die Pendelstange 12 in ihre die U-förmige Basis 3 öffnende Position entsprechend der Fig. 2 überführt werden.

Anhand der Fig. 2 und der angedeuteten verschiedenen Positionen der Pendelstange 12 erkennt man, dass es sich um eine an einem U-Schenkel 3a drehbar angeschlossene Pendelstange 12 handelt. Nach dem Ausführungsbeispiel ist die Verbindungsstange bzw. Pendelstange 12 drehbar an den rechten U-Schenkel 3a der U-förmigen Basis 3 angeschlossen. Demgegenüber geht die Pendelstange 12 eine lösbare Verbindung mit dem anderen linken U-Schenkel 3a ein.

Um dies im Detail zu realisieren, ist die fragliche Pendelstange 12 drehbar an eine Längsstrebe 6 der betreffenden Seitenwand 4, 5 angeschlossen. Bei der fraglichen Längsstrebe 6 handelt es sich um diejenige Längsstrebe 6 der betreffenden Seitenwand 4, 5, die zugleich auch die vertikale Achse 6 für die demgegenüber schwenkbaren Seitenwände 4, 5 definiert. Das gilt selbstverständlich nur beispielhaft und ist keineswegs einschränkend gemeint.

Die Pendelstange 12 ist jeweils fußseitig an die zugehörige Längsstrebe 6 der betreffenden Seitenwand 4, 5 angeschlossen. Dabei fungiert die Längsstrebe 6 der rechten Seitenwand 4 als gleichsam Drehlager für die Pendelstange 12, wohingegen die Pendelstange 12 rastbar mit der Längsstrebe 6 der anderen gegenüberliegenden linken Seitenwand 5 gekoppelt werden kann. Tatsächlich lässt sich die Pendelstange 12 mit der betreffenden Längsstrebe 6 der anderen linken Seitenwand 5 verrasten. Dadurch kann die Pendelstange 12 problemlos die zur Gebrauchslage nach der Fig. 1 gehörige schließende Position der Basis 3 ebenso wie die zur Nestlage nach der Fig. 2 gehörige öffnende Position gegenüber der Basis 3 einnehmen.

Die Pendelstange 12 fungiert darüber hinaus in ihrem die U-förmige Basis 3 schließenden Zustand als Auflager für die oberhalb der Basis 3 angeordnete Bodenplatte 9. Das erkennt man insbesondere anhand der Fig. 1 . Grundsätzlich ist es aber auch möglich, dass die Pendelstange 12 nicht die Funktion eines zusätzlichen Auflagers für die Bodenplatte 9 übernimmt, weil die Bodenplatte 9 ohnehin durch einerseits die horizontale Schwenkachse 10 und andererseits die Auflagerbügel 11 ausreichend gesichert ist.

Schließlich erkennt man insbesondere noch anhand der Fig. 2 , dass die Pendelstange 12 mit einem Verlängerungssteg 13 ausgerüstet ist. Der Verlängerungssteg 13 reicht nach dem Ausführungsbeispiel bis zu einer von der Unterseite der Basis 3 aufgespannten Ebene. Auf diese Weise können der fragliche Verlängerungssteg 13 und die Unterseite der Basis 3 insgesamt eine Aufnahmefläche definieren, die von einem Förderelement, beispielsweise einem Flurförderzeug und zugehörigen Gabelzinken, unterfahren werden kann.

Der erfindungsgemäße Rollbehälter lässt sich auf diese Weise problemlos sowohl in Querrichtung Q im Vergleich zur Längserstreckung der beiden Seitenwände 4, 5 unterfahren, wie dies die Fig. 1 andeutet und außerdem in Längsrichtung L, wie dies ebenfalls die Fig. 1 durch einen entsprechenden Pfeil transparent macht. Dadurch kann der Rollbehälter gleichsam unabhängig von seiner Position problemlos von dem fraglichen Förderelement unterfahren und transportiert werden. Das war bei den bisherigen Lösungen nicht möglich.

Von besonderer Bedeutung sind dann noch in den Figuren 2 und 3 zu erkennende Arretiermittel 14, 15. Bei den Arretiermitteln 14, 15 handelt es sich einerseits um Arretierbolzen 14 an der Pendelstange 12 und andererseits Arretierausnehmungen 15 an der Bodenplatte 9. Die Auslegung ist dabei so getroffen, dass die Arretiermittel 14, 15 in der Gebrauchslage der Bodenplatte 9 ineinandergreifen, wie man insbesondere beim Übergang von der Figur 2 zur Figur 3 nachvollziehen kann. Tatsächlich findet sich die Bodenplatte 9 in der Figur 2 in ihrer Nestlage und zeigt die Figur 3 den Übergang der Bodenplatte 9 in Richtung auf ihre Gebrauchslage und das Ineinandergreifen der Arretiermittel 14, 15.

Nach dem Ausführungsbeispiel sind jeweils zwei stiftartige bzw. zylinderförmige Arretierbolzen 14 an der Pendelstange 12 vorgesehen, die in die korrespondierenden Arretierausnehmungen 15 an einer Unterseite der Bodenplatte 9 eingreifen. Zu diesem Zweck finden sich die Arretierausnehmungen 15 an einem die Bodenplatte 9 definierenden umlaufenden Rahmen. Außerdem erkennt man, dass die jeweilige Arretierausnehmung 15 im Ausführungsbeispiel als Langloch ausgebildet ist. Die Längserstreckung des Langlochs folgt dabei der Längserstreckung des frontseitigen Rahmenschenkels des die Bodenplatte 9 definierenden umlaufenden Rahmens. Der jeweilige Arretierbolzen 14 ist nach dem Ausführungsbeispiel an die Pendelstange 12 angeschlossen, beispielsweise an diese angeschweißt.

Der betreffende Arretierbolzen 14 greift dabei mit vorgegebenen Spiel in die Arretierausnehmung 15 ein. Tatsächlich kann der Arretierbolzen 14 entlang der Längserstreckung des Langlochs hin- und her bewegt werden. Außerdem ist die Breite des Langlochs bzw. der Arretierausnehmung 15 unter Berücksichtigung eines Spiels von beispielsweise +/- 1 mm an den Durchmesser des zylinderförmigen Arretierbolzens 14 angepasst.

Anhand der Figur 3 mit der dort praktisch eingenommenen Gebrauchslage der Bodenplatte 9 erkennt man, dass das betreffende Arretiermittel 14, 15 die untere Querstrebe bzw. horizontale Schwenkachse 10 an der einen Seitenwand 5 zur Lagerung der Bodenplatte 9 und der wenigstens eine bzw. die mehreren Auflagerbügel 11 an einer der horizontalen Schwenkachse 10 gegenüberliegenden Seitenkante der Bodenplatte 9 zusammengenommen eine U-förmige Fixierung 14, 15, 10, 10' der Bodenplatte 9 gegenüber der U-förmigen Basis 3 definieren, und zwar eine lösbare Fixierung 14, 15, 10, 10'. Denn in der Gebrauchslage der Bodenplatte 9 liegt diese mit ihren Auflagerbügeln 11 auf der unteren Querstrebe 10', der gegenüberliegenden Seitenwand 4 auf, wie man bei einem Vergleich der Figuren 1 und 3 unmittelbar nachvollziehen kann.

Außerdem erkennt man, dass die Pendelstange 12 fußseitig drehbar nicht nur an den einen U-Schenkel 3a der U-förmigen Basis 3 angeschlossen ist, im Ausführungsbeispiel an den in der Blickrichtung in der Figur 2 rechten U-förmigen Schenkel 3a. Sondern zusätzlich ist die Auslegung so getroffen, dass die Pendelstange 12 kopfseitig einen Haltebügel 16 aufweist, der eine Längsstrebe 6 der anderen gegenüberliegenden Seitenwand 5 hintergreift. Anders ausgedrückt, ist die Pendelstange 12 fußseitig an die Längsstrebe 6 der einen Seitenwand 4 und damit auch an den zugehörigen U-förmigen Schenkel 3a der U-förmigen Basis 3 angeschlossen. Außerdem sorgt der besagte Haltebügel 16 in die U-förmige Basis 3 schließendem Zustand der Pendelstange 12 dafür, dass hierdurch die Längsstrebe 6 der anderen gegenüberliegenden Seitenwand 5 hintergriffen wird. Dadurch kommt es auch und insbesondere in den Figuren 1 bis 3 dargestellten Gebrauchszustand des erfindungsgemäßen Rollbehälters zu einer besonderen Stabilisierung und wird verhindert, dass die Bodenplatte 9 unbeabsichtigt in ihren in der Figur 2 dargestellten nestenden Zustand durch die Kraft der Feder überführt wird.

## Patentansprüche

1. Rollbehälter, insbesondere Rollcontainer, mit einer auf drehbaren Rollen (1, 2) gelagerten U-förmigen Basis (3) mit U-Schenkeln (3a), ferner mit einem auf der Basis (3) angeordneten Gitterwandgestell (4, 5) aus zumindest zwei sich gegenüberliegenden sowie um jeweils eine im wesentlichen vertikale Achse (6) schwenkbaren Seitenwänden (4, 5), und mit einer um eine größtenteils horizontale Schwenkachse (10) klappbaren Bodenplatte (9), wobei die Bodenplatte (9) gegen Federkraft in eine größtenteils horizontale Gebrauchslage oberhalb der Basis (3) sowie durch Federkraft in eine größtenteils aufrechte Nestlage schwenkbar ausgebildet ist, und wobei
eine die U-förmige Basis (3) wahlweise schließende und öffnende Verbindungsstange (12) zwischen den U-Schenkeln (3a) vorgesehen ist, welche als an einen U-Schenkel (3a) drehbar angeschlossene Pendelstange (12) ausgebildet ist,
**dadurch gekennzeichnet, dass**
die Pendelstange (12) und die Bodenplatte (9) jeweils Arretiermittel (14, 15) aufweisen, die in der Gebrauchslage der Bodenplatte (9) ineinandergreifen.

2. Rollbehälter nach Anspruch 1, **dadurch gekennzeichnet, dass** die Arretiermittel (14, 15) als einerseits Arretierbolzen (14) und andererseits Arretierausnehmung (15) ausgebildet sind.

3. Rollbehälter nach Anspruch 2, **dadurch gekennzeichnet, dass** jeweils zwei Arretierbolzen (14) und zwei zugehörige Arretierausnehmungen (15) vorgesehen sind.

4. Rollbehälter nach Anspruch 2 oder 3, **dadurch gekennzeichnet, dass** der Arretierbolzen (14) an der Pendelstange (12) und die Arretierausnehmung (15) an der Bodenplatte (2) realisiert ist, oder umgekehrt.

5. Rollbehälter nach dem der Ansprüche 2 bis 4, **dadurch gekennzeichnet, dass** der Arretierbolzen (14) an die Pendelstange (12) angeschlossen, beispielsweise angeschweißt oder angeschraubt, ist.

6. Rollbehälter nach einem der Ansprüche 2 bis 5, **dadurch gekennzeichnet, dass** der Arretierbolzen (14) mit vorgegebenen Spiel in die Arretierausnehmung (15) eingreift.

7. Rollbehälter nach einem der Ansprüche 2 bis 6, **dadurch gekennzeichnet, dass** die Arretierausnehmung (15) als Langloch mit einer an den Durchmesser des Arretierbolzens (14) angepassten Breite ausgebildet ist.

8. Rollbehälter nach einem der Ansprüche 1 bis 7, **dadurch gekennzeichnet, dass** das Arretiermittel (14, 15), eine untere Querstrebe (10) an einer Seitenwand (4) zur Lagerung der Bodenplatte (9) und wenigstens ein Auflagerbügel (11) an einer einer horizontalen Schwenkachse (10) gegenüberliegenden Seitenkante der Bodenplatte (9) zusammengenommen eine U-förmige Fixierung (14, 15, 10, 10') der Bodenplatte (9) gegenüber der U-förmigen Basis (3) und den Seitenwänden (4, 5) definieren.

9. Rollbehälter nach einem der Ansprüche 1 bis 8, **dadurch gekennzeichnet, dass** die Pendelstange (12) fußseitig drehbar an eine Längsstrebe (6) der mit dem U-Schenkel (3a) der Basis (3) gekoppelten einen Seitenwand (4) angeschlossen ist.

10. Rollbehälter nach einem der Ansprüche 1 bis 9, **dadurch gekennzeichnet, dass** die Pendelstange (12) kopfseitig einen Haltebügel (16) aufweist, welcher in die U-förmige Basis (3) schließendem Zustand eine Längsstrebe (6) der anderen Seitenwand (5) hintergreift.

## Claims

1. A roll container, in particular roll container, with a U-shaped base (3) with U-legs (3a) supported on rotatable casters (1, 2), furthermore with a mesh wall frame (4, 5) arranged on the base (3) comprising at least two opposing side walls (4, 5), which are pivotable around an essentially vertical axis (6), and with a base plate (9) which can be folded around a largely horizontal pivot axis (10), wherein the base plate (9) is designed to pivot against spring force into a largely horizontal operating position above the base (3) and can pivot by means of a spring force into a largely upright nest position, and wherein
a connecting rod (12) which optionally closes and opens the U-shaped base (3) is provided between the U-legs (3a), which is designed as a pendulum rod (12) connected rotatably to a U-leg (3a),
**characterised in that**
the pendulum rod (12) and the base plate (9) each have locking devices (14, 15) which interlock in the operating position of the base plate (9).

2. The roll container according to claim 1, **characterised in that** the locking means (14, 15) are designed as locking bolts (14) on the one hand and a locking recess (15) on the other.

3. The roll container according to claim 2, **characterised in that** two locking bolts (14) and two associated locking recesses (15) are provided in each case.

4. The roll container according to claim 2 or 3, **characterised in that** the locking bolt (14) is provided on the pendulum rod (12) and the locking recess (15) on the base plate (2), or vice versa.

5. The roll container according to any one of claims 2 to 4, **characterised in that** the locking bolt (14) is connected to the pendulum rod (12), e.g. welded or screwed on.

6. The roll container according to any one of claims 2 to 5, **characterised in that** the locking bolt (14) engages with specified clearance in the locking recess (15).

7. The roll container according to any one of claims 2 to 6, **characterised in that** the locking recess (15) is designed as an elongated hole with a width adapted to the diameter of the locking bolt (14).

8. The roll container according to any one of claims 1 to 7, **characterised in that** the locking means (14, 15), a lower cross strut (10) on a side wall (4) for bearing the base plate (9) and at least one support bracket (11) on a side edge of the base plate (9) opposite a horizontal pivot axis (10) together define a U-shaped fixing (14, 15, 10, 10') of the base plate (9) with respect to the U-shaped base (3) and the side walls (4, 5).

9. The roll container according to any one of claims 1 to 8, **characterised in that** the pendulum rod (12) is connected rotatably at the foot end to a longitudinal strut (6) of the side wall (4) coupled to the U-leg (3a) of the base (3).

10. The roll container according to any one of claims 1 to 9, **characterised in that** the pendulum rod (12) has a retaining bracket (16) at the head end, which engages behind a longitudinal strut (6) of the other side wall (5) when it is in the state closing the U-shaped base (3).

## Revendications

1. Contenant roulant, notamment conteneur roulant, pourvu d'une base (3) en forme de U logée sur des roulettes (1, 2) rotatives, avec des branches de U (3a), pourvu par ailleurs d'un châssis (4, 5) à parois grillagées placé sur la base (3) en au moins deux parois latérales (4, 5) mutuellement opposées ainsi que susceptibles de pivoter chaque fois autour d'un axe (6) sensiblement vertical et pourvu d'une plaque de fond (9) repliable autour d'un axe de pivotement (10) majoritairement horizontal, la plaque de fond (9) étant conçue en étant susceptible de pivoter à l'encontre de la force d'un ressort dans une position d'utilisation majoritairement horizontale au-dessus de la base (3), ainsi qu'à l'encontre de la force d'un ressort dans une position de rangement majoritairement debout et une barre de liaison (12) fermant et ouvrant sélectivement la base (3) en forme de U, laquelle est conçue sous la forme d'une barre pendulaire (12) raccordée de manière rotative sur une branche de U (3a) étant prévue entre les branches de U (3a),
**caractérisé en ce que**
la barre pendulaire (12) et la plaque de fond (9) comportent chacune des moyens d'arrêt (14, 15), qui dans la position d'utilisation de la plaque de fond (9) s'engagent les uns dans les autres.

2. Contenant roulant selon la revendication 1, **caractérisé en ce que** les moyens d'arrêt (14, 15) sont conçus en tant que d'une part un boulon d'arrêt (14) et d'autre part un évidement d'arrêt (15).

3. Contenant roulant selon la revendication 2, **caractérisé en ce que** chaque fois deux boulons d'arrêt (14) et deux évidements d'arrêt (15) correspondants sont prévus.

4. Contenant roulant selon la revendication 2 ou 3, **caractérisé en ce que** le boulon d'arrêt (14) est réalisé sur la barre pendulaire (12) et l'évidement d'arrêt (15) est réalisé sur la plaque de fond (2) ou inversement.

5. Contenant roulant selon l'une quelconque des revendications 2 à 4, **caractérisé en ce que** le boulon d'arrêt (14) est raccordé, par exemple soudé ou vissé sur la barre pendulaire (12).

6. Contenant roulant selon l'une quelconque des revendications 2 à 5, **caractérisé en ce que** le boulon d'arrêt (14) s'engage avec un jeu prédéfini dans l'évidement d'arrêt (15).

7. Contenant roulant selon l'une quelconque des revendications 2 à 6, **caractérisé en ce que** l'évidement d'arrêt (15) est conçu sous la forme d'un trou oblong, d'une largeur adaptée au diamètre du boulon d'arrêt (14).

8. Contenant roulant selon l'une quelconque des revendications 1 à 7, **caractérisé en ce que** le moyen d'arrêt (14, 15), une traverse (10) inférieure sur une paroi latérale (4) pour le logement de la plaque de fond (9) et au moins un étrier d'appui (11) sur une arête latérale de la plaque de fond (9) opposée à un axe de pivotement (10) horizontal définissent conjointement une fixation (14, 15, 10, 10') en forme de U de la plaque de fond (9) par rapport à la base (3) en forme de U et aux parois latérales (4, 5).

9. Contenant roulant selon l'une quelconque des revendications 1 à 8, **caractérisé en ce que**, du côté de son pied, la barre pendulaire (12) est raccordée de manière rotative sur un longeron (6) de l'une paroi latérale (4) accouplée avec la branche de U (3a) de la base (3).

10. Contenant roulant selon l'une quelconque des revendications 1 à 9, **caractérisé en ce que** du côté de sa tête, la barre pendulaire (12) comporte un étrier de maintien (16), qui dans l'état fermant la base (3) en forme de U s'accroche par l'arrière sur un longeron (6) de l'autre paroi latérale (5).
